# EUROPEAN PATENT APPLICATION

(11) **EP 2 610 488 A1**
(43) Date of publication of application: **03.07.2013**
(21) Application number: 10787984.3
(22) Date of filing: 24.08.2010
(51) Int. Cl.: F03D 11/04

(54) **WIND TURBINE DEVICE AND METHOD FOR CONSTRUCTING TOWER FOR BLADE WHEEL**

(71) Applicant: Mitsubishi Heavy Industries, Ltd., Tokyo 108-8215 (JP)
(72) Inventor: YOSHIMURA, Mitsuhiro, Tokyo 108-8215 (JP); HORIE, Hiroshi, Tokyo 108-8215 (JP)
(74) Representative: Intès, Didier Gérard André
(86) International application number: PCT/JP2010/064231
(87) International publication number: WO 2012/025985

(57) **Abstract**

Provided is a wind turbine generator having a tower structure that can cope with increases in the size and height thereof while avoiding the restrictions of transportation limits. In a wind turbine generator in which a nacelle is installed at a top portion of a monopole type wind turbine tower, in which tower shells (2a) having circular cylindrical shapes are connected together, to generate power, the tower (2) is provided with a double-tube structure (20) at least at the bottom end of the tower.

## Description

### {Technical Field}

The present invention relates to a wind turbine generator having a nacelle installed at a top portion of a wind turbine tower to generate power, and to a construction method for a wind turbine tower.

### {Background Art}

A wind turbine generator is a device in which a hub equipped with turbine blades rotates upon receiving wind power, and a generator that is driven by, for example, accelerating this rotation with a gearbox, generates power.
The above-described hub is attached at an end portion of a nacelle, which is installed on top of a wind turbine tower (hereinafter referred to as "tower") in a manner that allows yawing, and is supported so as to be rotatable in a lateral direction about a substantially horizontal rotation axis.

Generally, a steel-monopole type tower using a cylindrical tower shell is often employed in the above-described wind turbine tower, having a structure in which a base plate provided at the bottom end of the tower shell is secured to a steel-reinforced concrete base with anchoring bolts, or a structure in which the shell is directly embedded into the base. Note that the above-described tower shell employed herein is a steel plate that is bent into a cylindrical form and welded together at edge portions thereof.

The Patent Literature mentioned below discloses a base structure that is applied to a pile type tower structure, like a tower structure for a wind turbine generator, for example. In this case, concrete at the joining portions between the base and the tower structure has to set before proceeding to the next step.

### {Citation List}

### {Patent Literature}

{PTL 1} U.S. Patent Application Publication No. 2006/0185279 {Summary of Invention}

### {Technical Problem}

In recent years, because wind turbine generators tend to have increased output power, it has become necessary to increase the size and height of the tower. In general, such increases in the size and height of the tower result in increased tower diameter and increased plate thickness thereof.
On the other hand, the tower of a typical wind turbine generator is fabricated at a factory as a plurality of parts, which are divided in the length direction, etc., and the individual parts are transported to a construction site for assembly. Therefore, transportation limits established for public roads, etc. for transporting individual parts from the factory to a construction site restrict increases in the size and height of the tower.

Accordingly, there is a natural limit to increasing the size and height of the tower due to the above-described restrictions of transportation limits.
The present invention has been conceived in light of the above-described situation, and an object thereof is to provide a wind turbine generator, having a tower structure that can cope with increases in the size and height thereof while avoiding the restrictions of transportation limits, as well as a construction method for a wind turbine tower.

### {Solution to Problem}

In order to solve the above-described problems, the present invention employs the following solutions.
A wind turbine generator of the present invention is a wind turbine generator in which a nacelle is installed at a top portion of a monopole type wind turbine tower, in which cylindrical tower shells are connected together, to generate power, wherein the wind turbine tower is provided with a double-tube structure at least at the bottom end of the tower.

With the wind turbine generator described above, because the wind turbine tower is provided with the double-tube structure at least at the bottom end of the tower, it is possible to cope with increases in the height and the diameter by increasing the rigidity of the wind turbine tower.

In this case, the the double-tube structure preferably has the tower shell serving as an inner cylinder, an outer cylinder is provided so as to surround the outer circumference of the inner cylinder, and the inner cylinder and the outer cylinder are connected together.
In addition, the outer cylinder may be shaped like a circular truncated cone, which is connected at a top end thereof with an outer circumferential surface of the inner cylinder, and the diameter thereof gradually increases toward a bottom end thereof.

In the above-described invention, preferably, the outer cylinder can be divided into a plurality of sections in the circumferential direction and can be transported separately from the inner cylinder.
That is, when the diameter of the wind turbine tower is increased, it is desirable that the outer cylinder and the inner cylinder should be structured as separate pieces, and a more preferable structure of the outer cylinder is one that allows transportation to the construction site as a plurality of sections divided in the circumferential direction, enabling assembly at the construction site.

In the above-described invention, the double-tube structure is preferably provided with a concrete-filled layer in which a space between the inner cylinder and the outer cylinder is filled with concrete, and, accordingly, the rigidity can be further increased.
In this case, it is preferable that a protruding portion that protrudes into the concrete-filled layer from wall surfaces of the inner cylinder and the outer cylinder be provided.

A construction method for the wind turbine tower of the wind turbine generator of the present invention is a construction method for a wind turbine tower of a wind turbine generator in which a nacelle is installed at a top portion of a monopole type wind turbine tower, in which cylindrical tower shells are connected together, to generate power, the wind turbine tower being provided with a double-tube structure in which a space between an inner cylinder and an outer cylinder is filled with concrete at least at the bottom end of the tower, wherein a tower-shell connecting step, in which the tower shells are connected upward on the double-tube structure, is performed in parallel with a concrete pouring step, in which the double-tube structure is filled with concrete.

With the construction method for the wind turbine tower of the wind turbine generator described above, because the tower-shell connecting step, in which the tower shells are connected upward on the double-tube structure, is performed in parallel with the concrete pouring step, in which the double-tube structure is filled with concrete, the rigidity of the wind turbine tower can be increased with substantially the same construction period as with a conventional structure.

### {Advantageous Effects of Invention}

With the wind turbine generator of the present invention, because the rigidity of the wind turbine tower can be increased, it becomes possible to cope with increases in the size and height thereof, while avoiding the restrictions of transportation limits.
In addition, with the construction method for the wind turbine tower of the wind turbine generator of the present invention, even with a wind turbine tower whose rigidity can be further increased by performing the concrete pouring step, construction with substantially the same construction period as with the conventional construction is possible.

### {Brief Description of Drawings}

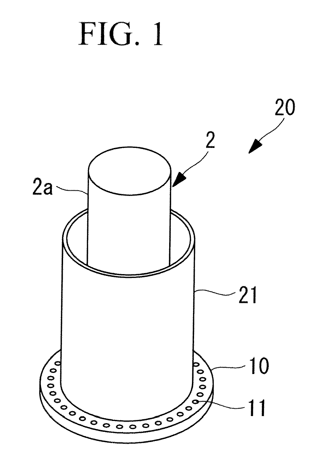

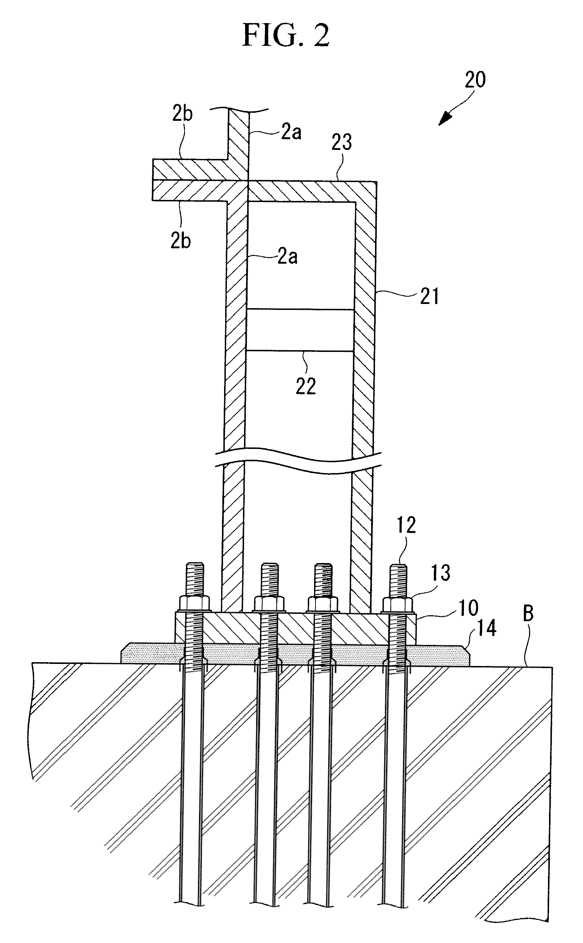

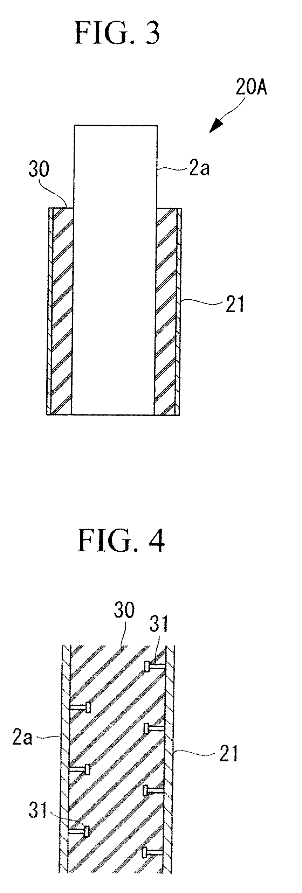

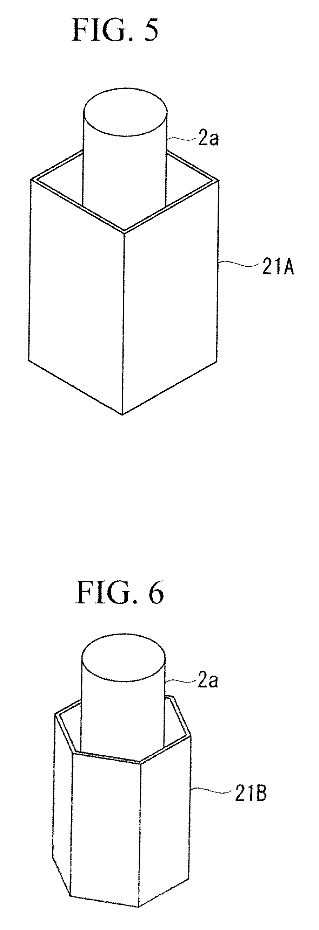

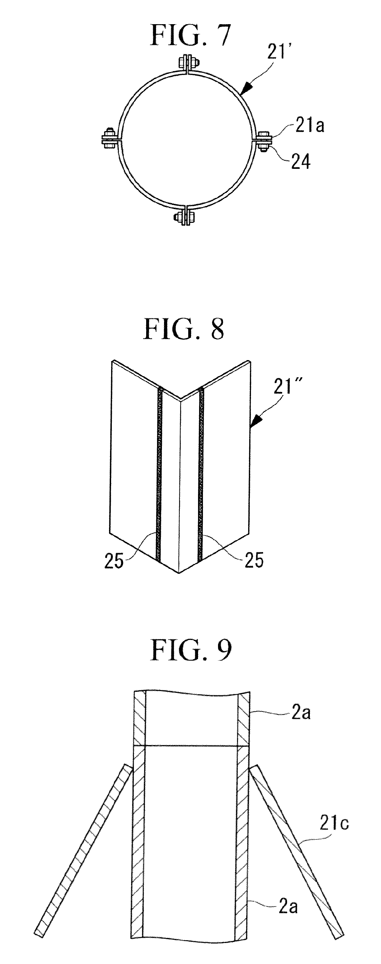

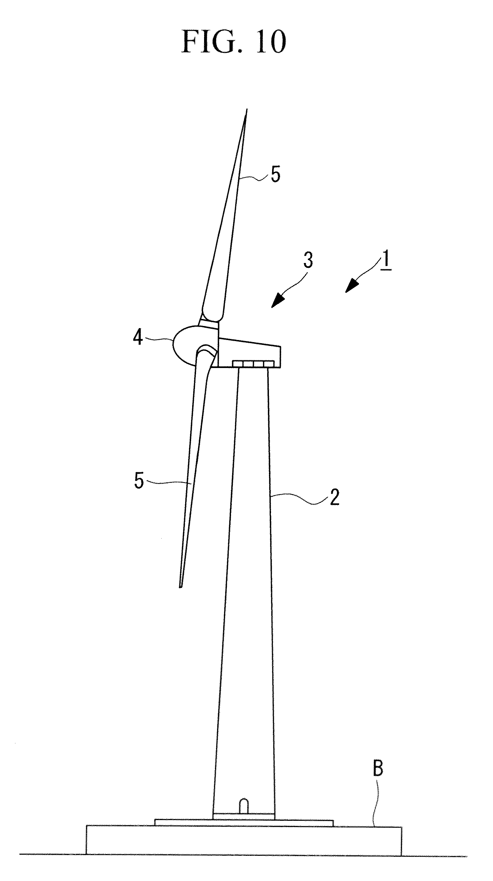

{Fig. 1} Fig. 1 is a schematic perspective view showing an embodiment of a double-tube structure in a wind turbine tower for a wind turbine generator according to the present invention.
{Fig. 2} Fig. 2 is a longitudinal sectional view showing the double-tube structure in Fig. 1.
{Fig. 3} Fig. 3 is a longitudinal sectional view showing a double-tube structure in which a concrete-filled layer is formed.
{Fig. 4} Fig. 4 is a partial enlarged sectional view of the double-tube structure equipped with protruding portions that protrude into the concrete-filled layer.
{Fig. 5} Fig. 5 is a schematic perspective view of a first modification of the double-tube structure, wherein an outer cylinder has a rectangular cross-section.
{Fig. 6} Fig. 6 is a schematic perspective view of a second modification of the double-tube structure, wherein the outer cylinder has a hexagonal cross-section.
{Fig. 7} Fig. 7 is a sectional view showing a bolt joint structure as an example of a divided structure of the outer cylinder.
{Fig. 8} Fig. 8 is a sectional view showing a welded structure as an example of the divided structure of the outer cylinder.
{Fig. 9} Fig. 9 is a schematic perspective view of a third modification of the double-tube structure, wherein the outer cylinder is shaped like a circular truncated cone.
{Fig. 10} Fig. 10 is a side view showing an outline of the wind turbine generator.

### {Description of Embodiments}

A wind turbine generator and a construction method for a wind turbine tower according to an embodiment of the present invention will be described below on the basis of the drawings.
A wind turbine generator 1 shown in Fig. 10 includes a wind turbine tower (hereinafter, referred to as "tower") 2 erected on a base B, a nacelle 3 that is installed at the top end of the tower 2, and a hub 4, which is provided at the front end of the nacelle 3 while being supported so as to be rotatable in a lateral direction about a substantially horizontal rotation axis.

A plurality of (for example, three) turbine blades 5 are attached to the hub 4 in a radiating pattern around the rotation axis thereof. Accordingly, the force of wind striking the turbine blades 5 in the rotation axis direction of the hub 4 is converted to motive power that rotates the hub 4 about the rotation axis thereof.

The tower 2 of the above-described wind turbine generator 1 is a monopole type tower in which a plurality of cylindrical tower shells are connected, and, for example, as shown in Figs. 1 and 2, a double-tube structure 20 is provided at least at the bottom end of the tower.
The double-tube structure 20 has a tower shell 2a of the tower 2 serving as an inner cylinder, and an outer cylinder 21 is provided so as to surround the outer circumference of the tower shell 2a, and, by providing connecting members such as ribs 22 and flanges 23, etc. at appropriate locations, the tower shell 2a and the outer cylinder 21 are integrally connected together by welding, bolting, or the like.

Although the tower shell 2a at the bottom-most level and the outer cylinder 21 are secured to a common base plate 10 in the example configuration shown in Fig. 2, it is desirable, especially when the tower diameter is large, to have a structure in which independent base plates are employed in a separate-piece structure, and the outer cylinder 21 is mounted at the construction site.
The thus-configured double-tube structure 20 is secured to the base B by inserting anchor bolts 12 into bolt holes 11, a number of which are provided in the base plate 10, and by tightening nuts 13 on the anchor bolts 12. Although the bolt holes 11 are provided on both the inside and outside of the tower shells 2a and the outer cylinder 21 in the illustrated example configuration, it is not limited thereto. Note that, in the figures, reference sign 2b denotes flanges for connecting the tower shells 2a, and reference sign 14 denotes a grouting layer.

Because the above-described double-tube structure 20 enables transmission of force by being connected with the outer cylinder 21, which is larger in diameter than the tower shell 2a, at the bottom end of the tower 2, the cross-sectional area of the double-tube structure 20 is increased, and the tower shell 2a and the outer cylinder 21 cope with the applied force as an integrated strengthening member, thereby increasing the rigidity of the tower 2.
Increasing the rigidity of the tower 2 in this way makes it easier to increase the height and diameter of the tower 2 as the output power of the wind turbine generator 1 is increased. In addition, the increased rigidity of the tower 2 makes it possible to reduce the diameter and the plate thickness of the tower shell 2a, by amounts corresponding to the increased rigidity due to the the double-tube structure 20.

Specifically, when the outer cylinder 21 is configured as the separate-piece structure which is mounted on site, the required rigidity can be ensured by manufacturing the tower shells 2a to be transported from the factory to the construction site within the restrictions of transportation limits and by finally mounting the outer cylinder 21 at the construction site.
In this case it is desirable to have a bolted structure in which, for example, as in an outer cylinder 21' shown in Fig. 7, the outer cylinder 21 is divided into a plurality of sections (four sections in the illustrated example) in the circumferential direction of the cylindrical shape, which are transported to the construction site, and the flanges 21a are joined with nuts and bolts 24. Alternatively, for example, as in the outer cylinder 21" shown in Fig. 8, a welded structure may be employed, in which edges of members at corner portions of a rectangular cross-section are bonded, on site, with welded portions 25 to form a cylindrical shape.

That is, by having a structure that is divided in the circumferential direction to allow assembly on site, the outer cylinder 21, having a larger diameter than the tower shell 2a, can readily avoid the restrictions of the transportation limits; therefore, the above-described double-tube structure 20 can increase the rigidity in accordance with increase in diameter of the tower 2.

Incidentally, although the above-described outer cylinder 21 has been described as having a cylindrical shape with a diameter larger than the tower shell 2a, which has a cylindrical shape, for example, an outer cylinder 21A with a rectangular cross-section shown in Fig. 5, as a first modification, or an outer cylinder 21B with a hexagonal cross-section shown in Fig. 6, as a second modification, is permissible, and the cross-sectional shape thereof is not particularly limited.
In addition, an outer cylinder 21c of a third modification shown in Fig. 9 is shaped like a circular truncated cone, wherein the top end thereof is connected to an outer circumferential surface of the tower shell 2a, which serves as an inner cylinder, and the diameter thereof gradually increases toward the bottom end, which is the base B side. In the outer cylinder 21c having such a circular truncated cone shape, even with a low height, the tower rigidity can be increased to an equivalent level as compared with a configuration having the same cross-sectional shape in the height direction.

It is desirable that, for example, as in a double-tube structure 20A shown Fig. 3, the above-described double-tube structure 20 should be provided with a concrete-filled layer 30 wherein a space between the tower shell 2a, serving as the inner cylinder, and the outer cylinder 21 is filled with concrete. That is, because the double-tube structure specifically has increased strength against compression stress due to the properties of concrete, the double-tube structure 20A provided with the concrete-filled layer 30 has an even greater rigidity as compared with the double-tube structure 20 in which a space therein is left hollow without filling it with concrete.

As shown in Fig. 4, for example, the above-described concrete layer 30 is preferably provided with protruding portions like stud dowels 31 that protrude into the concrete-filled layer 30 from an outer-wall surface of the tower shell 2a and an inner-wall surface of the outer cylinder 21. Because such stud dowels 31 integrate the tower shell 2a and the outer cylinder 21, with the concrete-filled layer 30 firmly joining them, a further increase in rigidity becomes possible.
Note that the concrete-filled layer 30 as described above can also be formed between the tower shell 2a and the outer cylinders 21A to 21c in the above-described modifications.

The tower 2 of the wind turbine generator 1 provided with the above-described double-tube structure 20A is constructed by a construction method described below.
That is, in the construction method for the wind turbine tower provided with the double-tube structure 20A in which the concrete-filled layer 30 is formed, at least at the bottom end of the tower, by filling the space between the tower shells 2a and the outer cylinder 21 with concrete, a tower-shell connecting step, in which the tower shells 2a are connected upward on the double-tube structure 20A, is performed in parallel with a concrete pouring step, in which the double-tube structure 20A is filled with concrete.

The wind turbine tower construction method described above is possible because the tower-shell connecting step is not affected by setting of the concrete poured in the concrete-filled layer 30.
As a result, because the tower-shell connecting step, in which the tower shells 2a are connected upward on the double-tube structure 20A, can be performed in parallel with and is affected little by the concrete pouring step for the double-tube structure 20A, which requires time for concrete to set, the construction period is almost never extended. Therefore, with substantially the same construction period as with a conventional structure without the the double-tube structure 20A, the tower 2 with increased rigidity can be constructed with a structure provided with the the double-tube structure 20A, which achieves superior, increased rigidity.

In this way, with the wind turbine generator 1 of the above-described embodiment, because the rigidity of the tower 2 can be increased by the double-tube structure 20 or 20A, it is possible to cope with an increase in the size of the wind turbine generator 1 and an increase in the height of the tower 2, while avoiding the restrictions of transportation limits.
In addition, by employing the wind turbine tower construction method of the above-described embodiment, even with the tower 2 provided with the double-tube structure 20A which makes it possible to further increase the rigidity by performing the concrete pouring step, construction is possible with substantially the same construction period as with the conventional construction.
Note that the present invention is not limited to the above-described embodiment, and appropriate alterations are permissible within a range that does not depart from the gist of the present invention.

**{Reference Signs List}**

| | |
|---|---|
| 1: | wind turbine generator |
| 2: | wind turbine tower (tower) |
| 2a: | tower shell (inner cylinder) |
| 3: | nacelle |
| 10: | base plate |
| 20, 20A: | the double-tube structure |
| 21, 21A to 21c: | outer cylinder |
| 30: | concrete-filled layer |
| 31: | stud dowel (protruding portion) |

## Claims

1. A wind turbine generator in which a nacelle is installed at a top portion of a monopole type wind turbine tower, in which cylindrical tower shells are connected together, to generate power,
wherein the wind turbine tower is provided with a double-tube structure at least at the bottom end of the tower.

2. A wind turbine generator according to Claim 1, wherein the double-tube structure has the tower shell serving as an inner cylinder, an outer cylinder is provided so as to surround the outer circumference of the inner cylinder, and the inner cylinder and the outer cylinder are connected together.

3. A wind turbine generator according to Claim 2, wherein the outer cylinder is shaped like a circular truncated cone, which is connected at a top end thereof with an outer circumferential surface of the inner cylinder, and the diameter thereof gradually increases toward a bottom end thereof.

4. A wind turbine generator according to Claim 2, wherein the outer cylinder can be divided into a plurality of sections in the circumferential direction and can be transported separately from the inner cylinder.

5. A wind turbine generator according to Claim 2, wherein the double-tube structure is provided with a concrete-filled layer in which a space between the inner cylinder and the outer cylinder is filled with concrete.

6. A wind turbine generator according to Claim 5, further comprising a protruding portion that protrudes into the concrete-filled layer from wall surfaces of the inner cylinder and the outer cylinder.

7. A construction method for a wind turbine tower of a wind turbine generator in which a nacelle is installed at a top portion of a monopole type wind turbine tower, in which cylindrical tower shells are connected together, to generate power,
the wind turbine tower being provided with a double-tube structure in which a space between an inner cylinder and an outer cylinder is filled with concrete at least at the bottom end of the tower,
wherein a tower-shell connecting step, in which the tower shells are connected upward on the double-tube structure, is performed in parallel with a concrete pouring step, in which the double-tube structure is filled with concrete.
